# EUROPEAN PATENT APPLICATION

(11) **EP 2 405 389 A1**
(43) Date of publication of application: **11.01.2012**
(21) Application number: 11172544.6
(22) Date of filing: 04.07.2011
(51) Int. Cl.: G06Q 30/00

(54) **An enhanced method and system of shopping using video hyperlink in television broadcast**

(30) Priority: 06.07.2010 IN CH19112010
(71) Applicant: SAMSUNG ELECTRONICS CO., LTD., Suwon-si Gyeonggi-do 442-742 (KR)
(72) Inventor: Ansari, Sariya, 226003 Lucknow (IN)
(74) Representative: Robinson, Ian Michael

(57) **Abstract**

In accordance with an embodiment of the invention, a method for shopping via television is provided. The method includes receiving a broadcast signal, extracting a video hyperlink in case the video hyperlink is present in the broadcast signal and parsing contents of the video hyperlink. The method also includes filtering the video hyperlink by predetermined factors, storing the video hyperlink filtered information, displaying a video content with the video hyperlink information and conducting the television shopping. The method of television shopping further includes receiving the broadcast signal with the video content, displaying the video content and detecting whether a shopping request is raised. The method also includes determining a user permitted for shopping and a mode of permission for shopping, processing shopping task. The method further includes storing the information in a memory device.

## Description

### FIELD OF INVENTION

This invention relates to shopping system, more particularly, to a television shopping system.

### BACKGROUND

Conventionally, the shopping via television is done via internet or phone or after pause of the video. Generally, television broadcasts commercial videos where the commercial does not have any information of the product. Hence the user or viewer, though interested, can to buy the product as there is no information with respect to the product. In a non limiting example in a movie a actor has wore a shirt or a shoes for which the user or viewer is interested, the user or viewer will not be able to buy the product as the information of the product is not provided in the movie video.

Typically, the commercial video with hyperlink data is provided where the human interaction is required every time and there is no filtering of the hyperlink with respect to user or viewer's preferences. Hence each time the user or viewer is interested on a product he has to pause or stop the video to get all the information or to buy the product which distracts or interrupts the user or viewer to view the program running at the moment.

Furthermore, profile purchasing filter does not exist in today's television shopping. If a viewer or user wishes to buy a particular product at particular time he has no option. Hence the schedule purchasing of the product(s) is not available currently.

Hence, there is a need for a system and a method to address the aforementioned issues.

### SUMMARY OF INVENTION

According to the present invention there is provided an apparatus and method as set forth in the appended claims. Other features of the invention will be apparent from the dependent claims, and the description which follows. In accordance with an embodiment of the invention, a method for shopping via television is provided. The method includes receiving a broadcast signal, extracting a video hyperlink in case the video hyperlink is present in the broadcast signal and parsing contents of the video hyperlink. The method also includes filtering the video hyperlink by predetermined factors, storing the video hyperlink filtered information, displaying a video content with the video hyperlink information and conducting the television shopping. The method of television shopping further includes receiving the broadcast signal with the video content, displaying the video content and detecting whether a shopping request is raised. The method also includes determining a user permitted for shopping and a mode of permission for shopping, processing shopping task. The method further includes storing the information in a memory device.

In accordance with another embodiment of the invention, a system for shopping via television is provided. The system includes a signal receiver configured to receive a broadcast signal, an electronic device configured to display the received broadcast signal and a mechanism coupled to the signal receiver. The mechanism further is configured to detect a presence of a first data of a video hyperlink data corresponding to a product within a broadcast signal. The mechanism is also configured to present an indication of the presence of the first data in the broadcast signal and to receive input corresponding to the indication. Furthermore the mechanism is configured to store a second data corresponding to the first data, in response to the input and to retrieve the second data. Further the mechanism is configured to utilize the second data to initiate a purchase request for the product.

### BRIEF DESCRIPTION OF FIGURES

FIG 1. Shows block diagram of the system for television shopping in accordance with the present invention.

FIG 2. Shows a flowchart of the method for television shopping in accordance with the present invention.

### DETAILED DESCRITPTION

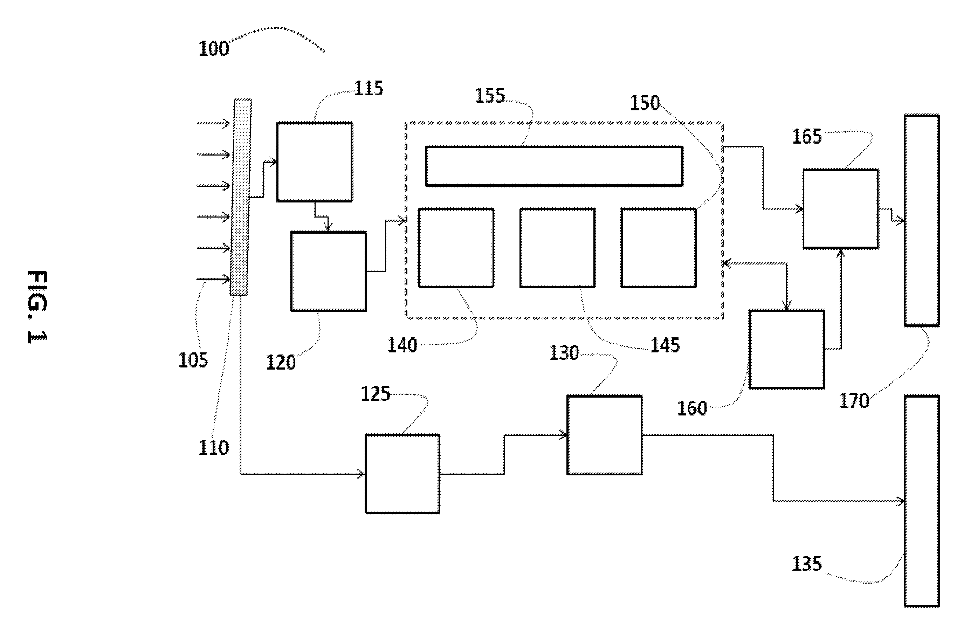

FIG 1. shows a block diagram of a system for television shopping 100 in accord with the present invention. The system receives a television signal 105 in a signal receiver 110.

A mechanism is coupled to the signal receiver 110 configured to detect a presence of a video hyperlink that is first data corresponding to a product within a broadcast signal. The mechanism coupled to the signal receiver 110 is also configured to present an indication of the presence of the first data in the broadcast signal and to receive input corresponding to the indication. In an embodiment of the invention the mechanism coupled to signal receiver 110 is also configured to store a second data corresponding to the first data in response to the input and to retrieve the second data. Further the mechanism coupled to the signal receiver 110 is configured to utilize the second data to initiate a purchase request for the product.

The received television signal 105 by signal receiver 110 passes through a Transportstream (TS) demux 115. The Transportstream demux 115 is configured to extract raw TS data into a new TS file, to change a pid of the extracted TS packets, to extract Packetized Elementary Stream or Elementary Stream (PES/ES) streams into external files and to filter Program Specific Information (PSI) data based on a table ID.

The received television signal 105 after being processed by Transportstream demux 115 passes through a MPEG decoder 120 where the television signal 105 received is converted in MPEG format for the display in television 170.

After processing from the MPEG decoder 120 the signal is processed through a hyperlink filter 140. The hyperlink filter 140 extracts a video hyperlink in the received television signal. The hyperlink filter 140 is configured to parse the contents of video hyperlink and to filter the video hyperlink by predetermined factors. The video hyperlink information extracted from the hyperlink filter 140 is stored in a memory device 155. The video content with the video hyperlink information is processed by video processor 160 and video out controller 165 and displayed in the television display 170.

In an embodiment of the invention the video hyperlink includes metadata of a product.

In another embodiment of the invention the predetermined factors for filtering video hyperlink is based on information based on preference customized by a user. In a non limiting example the user preference is based on products, brands, availability or price.

A device for profile purchasing 145 detects the hyperlink video information from the hyperlink filter 140 and determines if a shopping request is raised by the user. The device for profile purchasing 145 is configured to determine the user permitted for the shopping. The device for profile purchasing 145 is also configured to determine a mode of permission for shopping task and stores information in the memory device 155.

The device for profile purchasing 145 in accordance with the invention performs the step of purchasing the product by allowing the user to authorize purchasing of the selected product, by providing a feedback information to the user, by completing a purchase transaction for the selected product. The device for profile purchasing 145 is also configured to receive and analyze satisfaction response from the user.

In an embodiment of the invention the device for profile purchasing 145 is further configured to receive and analyze transaction related information from the user.

Further all the information received is stored in the memory device 155.

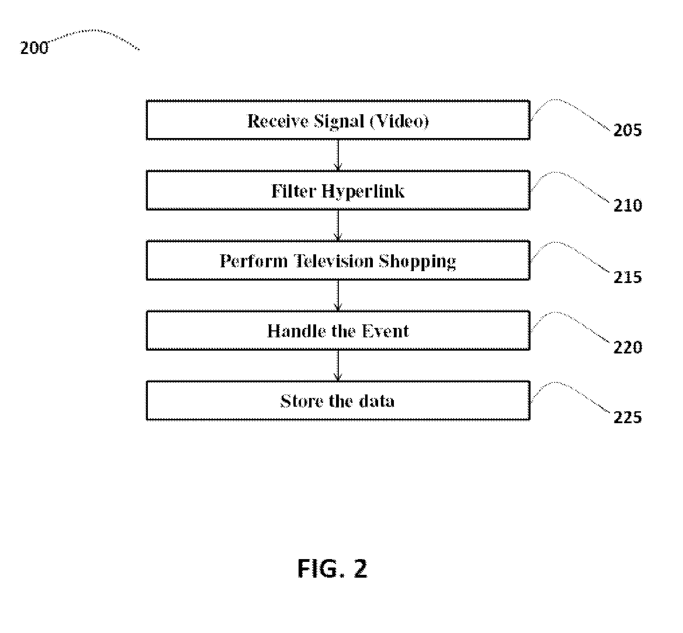

FIG. 2 shows a flowchart of the method for television shopping in accordance with the present invention.

At step 205 the system receives a broadcast television signal by the signal receiver. The mechanism is coupled to the signal receiver to detect the presence of the video hyperlink that is first data corresponding to the product within the broadcast signal. The mechanism is also configured to present the indication of the presence of the first data in the broadcast signal and to receive input corresponding to the indication. In an embodiment of the invention the mechanism coupled to signal receiver is also configured to store the second data corresponding to the first data in response to the input and to retrieve the second data. Further the mechanism is coupled to the signal receiver to utilize the second data to initiate the purchase request of the product.

The received television signal is processed by Transportstream demux and MPEG decoder as explained above.

At step 210 the hyperlink filter extracts the video hyperlink in the received television signal. The hyperlink filter is configured to parse the contents of video hyperlink and to filter the video hyperlink by predetermined factors. The video hyperlink information extracted from the hyperlink filter is stored in a memory device at step 225.

The video content with the video hyperlink information is processed by video processor and video out controller and displayed in the television display.

In an embodiment of the invention the video hyperlink comprises of metadata.

In another embodiment of the invention the predetermined factors for filtering video hyperlink is based on the information of the user's customized preferences. In a non limiting example the user preference is based on products, brands, availability or price.

At step 215 the method of television shopping is carried out. The device for profile purchasing detects the hyperlink video information from the hyperlink filter and determines if any user has raised the shopping request. Then the device for profile purchasing determines the user permitted for shopping. Further the device for profile purchasing determines the mode of permission for shopping task and stores the information in the memory device at step 225.

In accordance with the invention the device for profile purchasing allows the user to authorize purchasing of the selected product, presents the product as an item for purchase in a virtual shopping cart wherein the virtual shopping cart is presented on the display of the television.

At step 220 event of television shopping is handled. The user is enabled to interact with the virtual shopping cart wherein the purchase request for the product is initiated in response to the interacting by the user.

The device for profile purchasing in accordance with the invention performs the step of purchasing the product by allowing the user to authorize purchasing of the selected product, by providing feedback information to the user, by completing a purchase transaction for the selected product. The device for profile purchasing receives and analyzes satisfaction response from the user.

In an embodiment of the invention the device for profile purchasing further receives and analyzes transaction related information from the user.

At step 225 the video hyperlink, the first data, the second data and the purchase information is stored in the memory device.

The present invention may, of course, be carried out in other specific ways than those herein set forth without departing from the spirit and essential characteristics of the invention. The present embodiments are, therefore, to be considered in all respects as illustrative and not restrictive, and all changes coming within the meaning and equivalency range of the appended claims are intended to be embraced therein.

## Claims

1. A method of television shopping, the method comprising:
receiving a broadcast signal;
extracting a video hyperlink if the broadcast signal comprises the video hyperlink;
parsing contents of the extracted video hyperlink;
filtering the video hyperlink by predetermined factors;
storing the video hyperlink filtered information;
displaying a video content with the video hyperlink information; and
conducting the television shopping, wherein the television shopping comprises receiving the broadcast signal with the video content,
displaying the video content,
detecting if a shopping request is raised,
determining a user permitted for shopping,
determining a mode of permission for shopping,
processing shopping task, and
storing the information in a memory device.

2. The method according to claim 1, wherein the broadcast signal is acquired from at least one video signal source selected from a group consisting of a broadcasting system, a content creator, a service provider, and a set-top box.

3. The method according to claim 1, wherein the video hyperlink includes metadata.

4. The method according to claim 1, further comprising purchasing the selected product.

5. The method according to claim 1, further comprising filtering the video enhanced content information based on preferences customized by at least one user.

6. The method according to claim 1, further comprising automatically accessing and viewing the video hyperlink information.

7. The method according to claim 1, further comprising automatically saving the video hyperlink information in the memory device.

8. The method according to claim 1, wherein the hyperlink information includes a source of a product of interest.

9. The method according to claim 1, further comprising prioritizing results of the search performed by a performing step based on predetermined factors.

10. The method according to claim 9, wherein the predetermined factors comprises at least one of user preferences, products, brand, availability, and price.

11. The method according to claim 1, wherein the method of purchasing further comprising:
allowing the user to authorize purchasing of the selected product;
providing feedback information to the user;
completing a purchase transaction for the selected product; and
receiving and analyzing satisfaction response from the user.

12. The method according to claim 11, further comprising receiving and analyzing transaction related information from the user.

13. A device for television shopping comprising:
a signal receiver configured to receive a broadcast signal;
an electronic device configured to display the received broadcast signal; and
a mechanism coupled to the signal receiver,
wherein the mechanism is configured
to detect a presence of a first data of a video hyperlink data corresponding to a product within the broadcast signal,
to present an indication of the presence of the first data in the broadcast signal, receive input corresponding to the indication,
to store a second data corresponding to the first data, in response to the input,
to retrieve the second data, and
to utilize the second data to initiate a purchase request for the product.

14. The device of claim 13, wherein the mechanism comprises a processor configured to execute program instructions, wherein the receiver is configured to receive the video hyperlink information, wherein the mechanism is configured to subsequently execute the video hyperlink information and wherein the video hyperlink information is presented on a display coupled to the mechanism.

15. The device of claim 14, further comprising a storage device coupled to the mechanism, wherein the mechanism is configured to store the second data on the storage device, wherein subsequent to retrieving the second data, the mechanism is configured to present the product as an item for purchase in a virtual shopping cart, wherein the virtual shopping cart is presented on the display, and wherein the mechanism is further configured to enable a user to interact with the virtual shopping cart, wherein the purchase request for the product is initiated in response to the interacting by the user.
